# EUROPÄISCHE PATENTSCHRIFT

(11) **EP 3 462 042 B1**
(45) Veröffentlichungstag und Bekanntmachung des Hinweises auf die Patenterteilung: **18.05.2022**
(21) Anmeldenummer: 18196422.2
(22) Anmeldetag: 25.09.2018
(51) Int. Cl.: F16B 21/02, F16B 37/04

(54) **BEFESTIGUNGSANORDNUNG UND BAUTEIL FÜR EINE SOLCHE BEFESTIGUNGSANORDNUNG**
FASTENING ASSEMBLY AND COMPONENT FOR SUCH A FASTENING ASSEMBLY
DISPOSITIF DE FIXATION ET COMPOSANT POUR UN TEL DISPOSITIF DE FIXATION

(30) Priorität: 27.09.2017 DE 102017217225
(43) Veröffentlichungstag der Anmeldung: 03.04.2019
(73) Patentinhaber: Rixen, Wolfgang Klaus, 42699 Solingen (DE); Pies, Gerrit, 42699 Solingen (DE)
(72) Erfinder: Meyer, Torsten, 42657 Solingen (DE); Jansen, Alexander, 42105 Wuppertal (DE)
(74) Vertreter: BRP Renaud & Partner mbB Rechtsanwälte Patentanwälte Steuerberater

(56) Entgegenhaltungen:
- WO-A1-2010/138562
- WO-A1-2016/157147
- DE-A1-102007 059 049
- DE-A1-102016 108 697
- DE-U1-202012 005 714
- FR-A1- 2 894 304
- US-A1- 2003 213 876
- US-B2- 7 621 487

## Beschreibung

Die Erfindung betrifft eine Befestigungsanordnung mit einem ersten Bauteil, das eine hinterschnittene Nut aufweist und einem zweiten Bauteil, das an der hinterschnittenen Nut des ersten Bauteils lösbar gehalten werden kann. Ferner betrifft die Erfindung ein solches zweites Bauteil.

Bei solchen Befestigungsanordnungen weist das zweite Bauteil ein Basiselement und ein an der Rückseite des Basiselements angeordnetes Eingriffselement auf. Das Eingriffselement kann in die Nut des ersten Bauteils eingreifen und insbesondere mit einem Hammerkopfabschnitt des Eingriffselements den Hinterschnitt der Nut hintergreifen und somit das zweite Bauteil an dem ersten Bauteil halten. Je nach Lage des Hammerkopfabschnitts ist eine Eintauchstellung gegeben, bei welchem das Eingriffselement in die Nut eintauchen kann bzw. aus der Nut herausgenommen werden kann und eine Montagestellung gegeben, bei welcher der Hammerkopfabschnitt zumindest an einem der Hinterschnitte der Nut anliegt, so dass das Eingriffselement nicht aus der Nut herausgenommen bzw. herausgezogen werden kann, so dass das zweite Bauteil an dem ersten Bauteil befestigt ist.

Bei bekannten Befestigungsanordnungen ist das Eingriffselement, insbesondere der Hammerkopfabschnitt des Eingriffselements, mittels einer Schraubverbindung an einem zweiten Bauteil gehalten, so dass für das Befestigen des zweiten Bauteils an dem ersten Bauteil der Hammerkopfabschnitt separat in die Nut eingesetzt und daraufhin das zweite Bauteil an den Hammerkopfabschnitt und somit an dem ersten Bauteil festgeschraubt wird. Durch das Festschrauben wird ein Kraftschluss erzeugt, der die Montagestellung sichert. Allerdings ist zum Lösen und Befestigen des zweiten Bauteils von dem ersten Bauteil Werkzeug notwendig. Aus der US 7,621,487 B2 ist eine Befestigungsanordnung bekannt, die eine Halterung für eine Leitung aufweist, die an einem Bauteil mit einer hinterschnittenen Nut gehalten wird. Der Halter ist über einen Drehverschluss an dem Bauteil gehalten, der über einen Schnappverschluss gesichert wird. Die DE 10 2016 108 697 A zeigt eine weitere Befestigung nach dem Stand der Technik.

Der vorliegenden Erfindung liegt die Aufgabe zugrunde, eine verbesserte oder zumindest andere Ausführungsform einer Befestigungsanordnung bereitzustellen, die sich insbesondere durch die Möglichkeit auszeichnet, dass die beiden Bauteile ohne Werkzeug aneinander befestigt und gelöst werden können.

Diese Aufgabe wird erfindungsgemäß durch die Gegenstände der unabhängigen Ansprüche gelöst. Vorteilhafte Weiterbildungen sind Gegenstand der abhängigen Ansprüche.

Die Erfindung beruht auf dem allgemeinen Gedanken, es zu ermöglichen, dass ein Hammerkopfabschnitt zwischen einer Eintauchstellung und einer Montagestellung durch Rotation des zweiten Bauteils überführt werden kann. Um das zweite Bauteil in der Montagestellung zu halten, ist ferner eine Positioniervorrichtung vorgesehen, welche durch Formschluss oder Kraftschluss das zweite Bauteil in der Montagestellung hält. Ferner ist erfindungsgemäß vorgesehen, dass die Positioniervorrichtung mindestens ein Federelement aufweist, das in der Montagestellung des zweiten Bauteils zumindest teilweise in die Nut des ersten Bauteils eingreift. Somit ist es möglich, das zweite Bauteil mit dem Eingriffselement in die Nut einzuführen, daraufhin das zweite Bauteil zu verdrehen, um den Hammerkopfabschnitt des Eingriffselements in die Montagestellung zu bewegen, so dass der Hammerkopfabschnitt zumindest teilweise einen Hinterschnitt der Nut hintergreift und an dieser anliegt, so dass das zweite Bauteil an dem ersten Bauteil gehalten ist. Die Positioniervorrichtung kann dabei mittels Kraftschluss, das heißt durch Reibung, das zweite Bauteil in der Montagestellung halten, so dass bei normaler Benutzung die Montagestellung erhalten bleibt. Des Weiteren kann auch ein Formschluss alternativ oder zusätzlich vorgesehen sein, welcher eine Art Einrasteffekt in der Montagestellung bewirkt. Durch das Federelement kann ein solcher Formschluss erzielt werden. Des Weiteren ist erfindungsgemäß vorgesehen, dass das Federelement durch einen Bereich mit reduzierter Wandstärke gebildet ist. Durch die reduzierte Wandstärke verringert sich die Federkonstante, so dass das Federelement elastischer ist als der Rest des zweiten Bauteils.

Eine günstige Möglichkeit sieht vor, dass die Positioniervorrichtung mindestens ein Federelement aufweist, das in der Montagestellung zumindest teilweise gespannt ist und dadurch den Hammerkopfabschnitt gegen die Hinterschnitte der Nut vorspannt. Dadurch beseitigt das Federelement zum einen das Spiel, so dass das zweite Bauteil spielfrei an dem ersten Bauteil gehalten ist. Zum anderen bewirkt die Vorspannung des Federelements eine Reibkraft, welche das zweite Bauteil in der Montagestellung hält.

Es versteht sich, dass ein einzelnes Federelement sowohl die Vorspannung als auch den Formschluss bewirken kann. Selbstverständlich ist es auch möglich für die Wirkung der Vorspannung und des Formschlusses unterschiedliche Federelemente zu verwenden. Besonders bevorzugt werden allerdings zwei Federelemente verwendet, welche jeweils sowohl die Vorspannung als auch einen Formschluss bewirken. In einem solchen Fall ist je ein Federelement zu beiden Seiten des Eingriffselements angeordnet, so dass, wenn das Eingriffselement in die Nut eingetaucht ist und die Montagestellung gegeben ist, zu beiden Seiten des Eingriffselements je ein Federelement in die Nut teilweise eingreift und somit per Formschluss die Montagestellung sichert.

Eine vorteilhafte Lösung sieht vor, dass das mindestens eine Federelement an der Rückseite des Basiselements des zweiten Bauteils ausgebildet ist, dass das Basiselement des zweiten Bauteils an der Rückseite eine Rückfläche aufweist und dass das mindestens eine Federelement gegenüber der Rückfläche des Basiselements des zweiten Bauteils erhaben ist. Das heißt, das Federelement bildet eine Erhebung, die in die Nut des ersten Bauteils eingreifen kann und somit den Formschluss bewirken kann, mit welchem die Montagestellung gesichert wird. Vorzugsweise ist eine Breite der Erhebung an eine Breite der Nut angepasst, so dass das Rotationsspiel reduziert ist. Beispielsweise umranden die Erhebung Rampen, so dass ein Lösen des zweiten Bauteils aus der Montagestellung leichter möglich ist. Dadurch kann auch ein Entfernen des zweiten Bauteils vom ersten Bauteil ohne Werkzeuge erreicht werden.

Eine besonders vorteilhafte Lösung sieht vor, dass unterhalb des Federelements eine Ausnehmung oder ein Hohlraum vorgesehen ist. Das heißt, dass ausgehend von der Rückseite bzw. der Rückfläche des Basiselements gesehen der Hohlraum oder die Ausnehmung innerhalb des Basiselements gebildet ist. Durch den Hohlraum bzw. die Ausnehmung ist zum einen die reduzierte Wandstärke erreicht. Zum anderen ist somit Raum bereitgestellt, in welchen das Federelement abtauchen kann, so dass die Elastizität des Federelements ausgenutzt werden kann.

Eine günstige Variante sieht vor, dass das zweite Bauteil einen Bolzenabschnitt aufweist, welcher den Hammerkopfabschnitt mit der Rückfläche des zweiten Bauteils verbindet, und dass an dem Bolzenabschnitt ein Rotationsbegrenzungselement angeordnet ist, das eine Rotation des zweiten Bauteils gegenüber dem ersten Bauteil begrenzt, wenn sich das Eingriffselement in der Nut befindet. Durch die Begrenzung der Rotation kann das zweite Bauteil gerade zwischen der Eingreifstellung und der Montagestellung hin und her bewegt werden. Dadurch erleichtert sich die Handhabe, da beim Befestigen und Lösen des zweiten Bauteils am ersten Bauteil weniger genau auf die exakte Positionierung geachtet werden muss. Diese ergibt sich automatisch durch das Rotationsbegrenzungselement.

Eine weitere günstige Variante sieht vor, dass das Rotationsbegrenzungselement die Rotation des zweiten Bauteils auf ungefähr 90° begrenzt. Ungefähr 90° heißt in diesem Zusammenhang 90° +/- 10°, vorzugsweise +/- 5° besonders bevorzugt nur +/- 2°.

Eine weitere besonders günstige Variante sieht vor, dass das Rotationsbegrenzungselement durch eine spezielle Querschnittsform des Bolzenabschnitts gegeben ist. Dabei weist der Querschnitt des Bolzenabschnittes zwei sich gegenüberliegende Ecken auf und zwei sich gegenüberliegende um 90° zu den Ecken verdrehte Kreisbogenabschnitte auf. Die Kreisbogenabschnitte sind derart ausgerichtet, dass der zugehörige Mittelpunkt auf einer Rotationsachse liegt um welche das zweite Bauteil relativ zum ersten Bauteil zwischen der Eingreifstellung und der Montagestellung gedreht wird. Die um ca. 90° zu den Kreisbogenabschnitten versetzten Ecken stehen über einen virtuellen Kreis um die Rotationsachse hinaus, so dass die Ecken die Rotation des Bolzenabschnitts innerhalb der Nut begrenzen können. Beispielsweise liegt in der Montagestellung eine der beiden Flanken der Ecken jeweils an einer der Nutflanke an, während in der Eingreifstellung, wenn das Rotationsbegrenzungselement die Rotation begrenzt, die jeweils andere Flanke der Ecken an jeweils einer der Nutflanken anliegt.

Es versteht sich, dass es ausreichend ist, wenn die Flanken der Ecken vorhanden sind, welche die Rotation in der Eingreifstellung beenden. Durch die Positioniervorrichtung ist die Lage der Montagestellung bereits ausreichend gesichert, so dass das Rotationsbegrenzungselement die Position der Montagestellung nicht definieren müsste.

Die Erfindung sieht vor, dass das zweite Bauteil einen Magnethalter als Halteeinrichtung aufweist, an der Hilfsmittel, insbesondere Werkzeuge, gehalten werden können. Dadurch, dass das zweite Bauteil ohne Werkzeug an dem erstem Bauteil befestigt und wieder abgenommen werden kann, können somit durch die Halteeinrichtung, die am zweiten Bauteil ausgebildet ist, die Halteeinrichtungen flexibel ohne Werkzeug an dem ersten Bauteil entlang der Nut befestigt werden. Solche Halteeinrichtungen können vielfältig ausgestaltet sein und für eine Vielzahl von Hilfsmitteln, insbesondere Werkzeugen verwendet werden. Beispielsweise können solche Halteeinrichtungen für Maulschlüssel, Stifte, Sichtlagerkisten, Dokumente, Bits oder Heftwerkzeuge ausgebildet sein. Die Halteeinrichtung kann dabei durch Magnetkräfte die jeweiligen Hilfsmittel an einer Halteeinrichtung halten.

Eine weitere zweckmäßige Möglichkeit sieht vor, dass das Eingriffselement drehfest an dem zweiten Bauteil gehalten ist. Dadurch kann durch Greifen des zweiten Bauteils das Eingriffselement und damit auch der Hammerkopfabschnitt des Eingriffselements innerhalb der Nut gedreht werden, so dass das zweite Bauteil ohne Hilfsmittel zwischen der Eingreifstellung und der Montagestellung hin- und herbewegt werden kann.

Eine weitere besonders zweckmäßige Möglichkeit sieht vor, dass das Eingriffselement und das Basiselement materialeinheitlich einstückig ausgebildet sind. Dies kann beispielsweise durch ein Kunststoffspritzgussverfahren erzielt werden. Dies ermöglicht eine einfache Herstellung des zweiten Bauteils, ohne dass zusätzliche Montageschritte, wie beispielsweise Festschrauben des Eingriffselements an dem zweiten Bauteil, notwendig wären.

Eine günstige Lösung sieht vor, dass die Halteeinrichtung materialeinheitlich einstückig zu dem Basiselement ausgebildet ist. Dies ist beispielsweise durch ein Kunststoffspritzgussverfahren möglich. Dadurch vereinfacht sich die Herstellung des zweiten Bauteils. Insbesondere in Kombination mit einem materialeinheitlich einstückig ausgebildeten Eingriffselement, kann somit das gesamte zweite Bauteil aus einem Stück hergestellt werden, so dass die Herstellungsschritte des zweiten Bauteils reduziert werden.

Ferner beruht die Erfindung auf dem allgemeinen Gedanken ein Bauteil für eine solche Befestigungsanordnung bereitzustellen. Das erfindungsgemäße Bauteil weist die Merkmale von Anspruch 9 auf. Dabei wird ein Bauteil mit einem Basiselement und mit einem Eingriffselement, das an einer Rückseite an dem Basiselement angeordnet ist und das einen Bolzenabschnitt und einen Hammerkopfabschnitt aufweist, bereitgestellt, wobei der Bolzenabschnitt den Hammerkopfabschnitt mit dem Basiselement verbindet. Zusätzlich ist eine als Magnethalter ausgebildete Halteeinrichtung vorgesehen. Erfindungsgemäß ist vorgesehen, dass das Bauteil mindestens ein Federelement aufweist, das mit dem Bolzenabschnitt eine Linie bildet, die quer zu einer Längserstreckungsrichtung des Hammerkopfabschnitts verläuft. Wie bereits erläutert, dient der Hammerkopfabschnitt dazu, einen Hinterschnitt einer Nut eines Bauteils der Befestigungsanordnung zu hintergreifen. Um diesen Hinterschnitt zu hintergreifen und an diesem anzuliegen, muss die Längserstreckungsrichtung des Hammerkopfabschnitts quer zu der Nut verlaufen. Das Federelement ist nun dazu gedacht, das Bauteil in einer Montagestellung, in welcher der Hammerkopfabschnitt die Hinterschnitte der Nut hintergreift und an diesen anliegt, zu halten. Dazu muss in der Montagestellung das Federelement in die Nut eingreifen können. Dies ist gerade dann gegeben, wenn eine durch das Federelement und den Bolzenabschnitt gebildete Linie quer zu der Längserstreckungsrichtung des Hammerkopfabschnitts verläuft. Somit kann mit Hilfe des Federelements das Bauteil in der Montagestellung, in welcher der Hammerkopfabschnitt an den Hinterschnitten der Nut eines Bauteils der Befestigungsanordnung anliegt, gesichert werden.

Eine zweckmäßige Variante sieht vor, dass das Bauteil zwei Federelemente aufweist, die zusammen mit dem Bolzenabschnitt auf einer Linie liegen. Durch die Verwendung von zwei Federelementen, kann die Vorspannung des Bauteils gegenüber dem Bauteil der Befestigungsanordnung symmetrisch zu dem Eingriffselement und dem Hammerkopfabschnitt erfolgen, so dass das Bauteil gerade dem mit der Nut versehenen Bauteil der Befestigungsanordnung gehalten werden kann. Darüber hinaus bewirkt die Verwendung von zwei Federelementen, dass die Sicherung der Montagestellung verbessert ist und dass beim Ein- und Ausdrehen des Bauteils aufgrund der Symmetrie die Kräfte auf das Eingriffselement, insbesondere den Bolzenabschnitt des Eingriffselements verringert werden. Damit beide Federelemente in die Nut eingreifen können, sollten die beiden Federelemente und der Bolzenabschnitt ungefähr auf einer Linie liegen.

Eine weitere zweckmäßige Variante sieht vor, dass das mindestens eine Federelement an der Rückseite des Basiselements ausgebildet ist, dass das Basiselement an der Rückseite eine Rückfläche aufweist, und dass das mindestens eine Federelement gegenüber der Rückfläche des Basiselements erhaben ist. Somit steht das Federelement von der Rückfläche vor, so dass das Federelement in eine Nut an einem Bauteil der Befestigungsanordnung eingreifen kann und somit die rotatorische Lage des Bauteils sichern kann.

Eine vorteilhafte Möglichkeit sieht vor, dass das Federelement durch einen Bereich mit reduzierter Wandstärke gebildet ist. Durch die Reduzierung der Wandstärke erhöht sich die Flexibilität des Federelements. Besonders bevorzugt ist auch eine Ausnehmung oder ein Hohlraum unter dem Federelement vorgesehen. Durch diese Ausnehmung oder Hohlraum kann das Federelement sich frei bewegen. Somit kann das Federelement abtauchen, wodurch die Erhebung, die durch das Federelement gebildet ist, sich federnd zurückdrücken lässt. Folglich kann das Federelement beim Eindrehen von der Eingreifstellung in die Montagestellung zurückfedern. Sobald das Bauteil die Montagestellung erreicht, kann sich das Federelement wieder teilweise entspannen und in die Nut am Bauteil der Befestigungsanordnung eingreifen.

Eine zweckmäßige Lösung sieht vor, dass das Eingriffselement drehfest an dem Bauteil gehalten ist. Dadurch kann das Eingriffselement und damit der an dem Eingriffselement angeordnete Hammerkopfabschnitt in der Nut des Bauteils der Befestigungsanordnung gedreht werden, indem das zweite Bauteil gedreht wird. Das zweite Bauteil ist üblicherweise groß genug, um es bequem greifen zu können, so dass ein ausreichendes Drehmoment ausgeübt werden kann, ohne ein Werkzeug zu verwenden.

Eine weitere zweckmäßige Lösung sieht vor, dass das Eingriffselement und das Basiselement materialeinheitlich einstückig ausgebildet sind. Somit ergibt sich eine einfache Herstellung, wenn beispielsweise ein Kunststoffspritzgussverfahren verwendet wird. Eine weitere besonders zweckmäßige Lösung sieht vor, dass die Halteeinrichtung materialeinheitlich einstückig zu dem Basiselement ausgebildet ist. Besonders vorteilhaft ist es, wenn das gesamte zweite Bauteil materialeinheitlich und einstückig ausgebildet ist.

Weitere wichtige Merkmale und Vorteile von Ausführungsformen der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

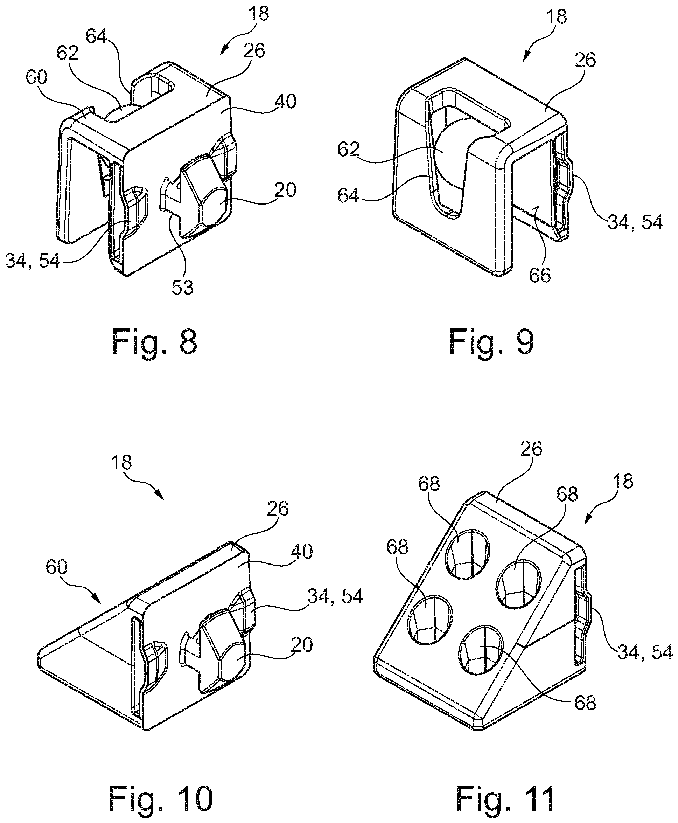

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen. Die Varianten in Figuren 8-19 zeigen nicht alle Merkmale der Erfindung.

Es zeigen, jeweils schematisch,
- Fig. 1: eine perspektivische Aufsicht auf ein zweites Bauteil einer erfindungsgemäßen Befestigungsanordnung gemäß einer ersten Ausführungsform,
- Fig. 2: eine Aufsicht auf das zweite Bauteil aus Fig. 1,
- Fig. 3: ein Schnitt durch das zweite Bauteil aus Fig. 1 auf Höhe des Bolzenabschnitts,
- Fig. 4: eine Darstellung der Befestigungsanordnung, wobei das zweite Bauteil zu einem ersten Bauteil so ausgerichtet ist, dass ein Hammerkopfabschnitt des zweiten Bauteils in Eintauchstellung zur Nut des ersten Bauteils steht,
- Fig. 5: eine Darstellung der Befestigungsanordnung aus Fig. 4, wobei das Eingriffselement des zweiten Bauteils in die Nut des ersten Bauteils eingreift,
- Fig. 6: eine Darstellung der Befestigungsanordnung aus Fig. 4 in einer Zwischenstellung zwischen der Eingreifstellung und der Montagestellung, wobei das zweite Bauteil teilweise gegenüber dem ersten Bauteil verdreht ist,
- Fig. 7: eine Darstellung der Befestigungsanordnung gemäß der Fig. 4 bis 6, wobei das zweite Bauteil in einer Montagestellung sich zum ersten Bauteil befindet,
- Fig. 8: eine perspektivische Ansicht auf eine Variante des zweiten Bauteils der Befestigungsanordnung,
- Fig.9: eine perspektivische Ansicht aus einem anderen Blickwinkel auf das zweite Bauteil aus Fig. 8,
- Fig. 10: eine perspektivische Ansicht auf eine weitere Variante des zweiten Bauteils der Befestigungsanordnung,
- Fig. 11: eine perspektivische Ansicht aus einem anderen Blickwinkel auf das zweite Bauteil gemäß Fig. 10,
- Fig. 12: eine perspektivische Ansicht auf eine weitere Variante des zweiten Bauteils der Befestigungsanordnung,
- Fig. 13: eine Aufsicht von oben auf das zweite Bauteil aus Fig. 12,
- Fig. 14: eine perspektivische Ansicht auf eine weitere Variante des zweiten Bauteils der Befestigungsanordnung,
- Fig. 15: eine perspektivische Ansicht aus einem anderen Blickwinkel auf das zweite Bauteil aus Fig. 14,
- Fig. 16: eine perspektivische Ansicht auf eine weitere Variante des zweiten Bauteils der Befestigungsanordnung,
- Fig. 17: eine Aufsicht auf das zweiten Bauteil aus Fig. 16,
- Fig. 18: eine perspektivische Ansicht auf eine weitere Variante des zweiten Bauteils der Befestigungsanordnung, und
- Fig. 19: eine perspektive Ansicht auf das zweite Bauteil aus Fig. 18.

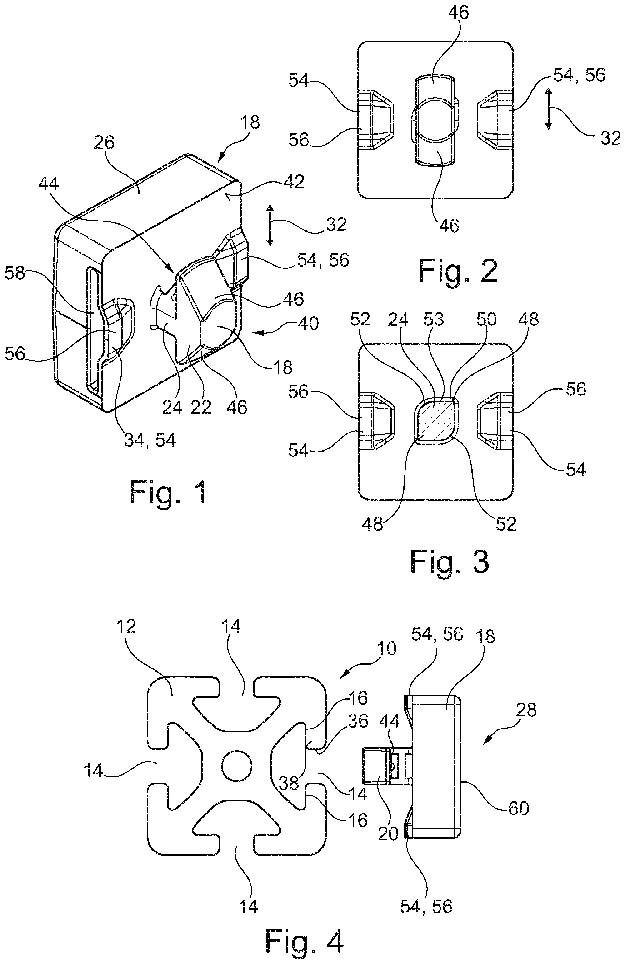

Eine in den Fig. 1 bis 7 dargestellte Ausführungsform einer Befestigungsanordnung 10 umfasst ein erstes Bauteil 12, das mindestens eine Nut 14 aufweist, die hinterschnitten ist. Entsprechend weist die Nut 14 mindestens einen, vorzugsweise zwei, Hinterschnitte 16 auf. Ein solches erstes Bauteil 12 kann beispielsweise durch einen Profilstab oder eine Nutenplatte gebildet sein. Ferner umfasst die Befestigungsanordnung 10 ein zweites Bauteil 18, das ein Eingriffselement 20 umfasst, welches dazu ausgebildet ist, in die Nut 14 des ersten Bauteils 12 einzugreifen und zumindest einen der Hinterschnitte 16 zu hintergreifen und somit das zweite Bauteil 18 an dem ersten Bauteil 12 zu befestigen. Das Eingriffselement 20 weist dazu einen Hammerkopfabschnitt 22 auf, welcher den Hinterschnitt 16 hintergreifen und an dem Hinterschnitt 16 anliegen kann, sowie einen Bolzenabschnitt 24, welcher den Hammerkopfabschnitt 22 mit einem Basiselement 26 des zweiten Bauteils 18 verbindet.

Dabei ist eine Eintauchstellung 28 definiert, bei welcher der Hammerkopfabschnitt 22 des zweiten Bauteils 18 derart zu der Nut 14 des ersten Bauteils 12 ausgerichtet ist, dass dieser in die Nut 14 eintauchen kann. Des Weiteren ist eine Montagestellung 30 definiert, in welcher das Eingriffselement 20 und insbesondere der Hammerkopfabschnitt 22 des zweiten Bauteils 18 in der Nut 14 eingetaucht ist und derart angeordnet ist, dass eine Längserstreckungsrichtung 32 des Hammerkopfabschnitts 22 schräg zur Nut 14 verläuft, so dass Teile des Hammerkopfabschnitts 22 die Hinterschnitte 16 hintergreifen und an diesen anliegen, so dass der Hammerkopfabschnitt 22 nicht aus der Nut 14 quer zur Nut 14 herausgezogen werden kann.

Des Weiteren weist die Befestigungsanordnung 10 eine Positioniervorrichtung 34 auf, welche durch eine Kombination mehrerer Elemente an dem ersten Bauteil 12 und dem zweiten Bauteil 18 gegeben ist. Die Positioniervorrichtung 34 hält das zweite Bauteil 18 in der Montagestellung 30, so dass die Montagestellung 30 im normalen Betrieb nicht aufgelöst wird. Das heißt im normalen Betrieb verbleibt das zweite Bauteil 18 am ersten Bauteil 12 in der Montagestellung 30 und somit an dem ersten Bauteil 12 befestigt. Es versteht sich, dass die Positioniervorrichtung 34 die beiden Bauteile 12 und 18 lösbar in der Montagestellung 30 hält, so dass das zweite Bauteil 18 wieder vom ersten Bauteil 12 entfernt werden kann.

Die Nut 14 des ersten Bauteils 12 weist einen pilzähnlichen bzw. hammerkopfförmigen Querschnitt auf, so dass die Hinterschnitte 16 gebildet sind. Die außenliegende Nutöffnung 36 ist dadurch schmaler als die Nut, welche hinter den Hinterschnitten 16 liegt. Nutflanken 38, welche die Nut seitlich begrenzen, liegen also im Bereich der Nutöffnung 36 näher zueinander und erweitern sich an den Hinterschnitten 16, so dass durch die Hinterschnitte 16 ein Absatz gebildet ist, in welchem sich der Hammerkopfabschnitt 22 des zweiten Bauteils 18 festhalten kann.

Das zweite Bauteil 18 weist an seinem Basiselement 26 eine Rückseite 40 auf, welche in der Montagestellung 30 dem ersten Bauteil 12 zugewandt ist. An der Rückseite 40 ist eine Rückfläche 42 gebildet, welche vorzugsweise in der Montagestellung 30 zumindest teilweise am ersten Bauteil 12 flächig anliegt.

Der Hammerkopfabschnitt 22 des Eingriffselements 20 des zweiten Bauteils 18 steht in Richtung der Längserstreckungsrichtung 32 des Hammerkopfabschnitts 22 über den Bolzenabschnitt 24 über, so dass eine Anlagefläche 44 an dem Hammerkopfabschnitt 22 gebildet ist, mit welcher der Hammerkopfabschnitt 22 an den Hinterschnitten 16 der Nut 14 anliegt, wenn sich die beiden Bauteile 12 und 18 in der Montagestellung 30 befinden.

Quer zur Längserstreckungsrichtung 32 des Hammerkopfabschnitts 22 ist der Hammerkopfabschnitt 22 fluchtend zu dem Bolzenabschnitt 24 oder schmaler als der Bolzenabschnitt 24, so dass der Hammerkopfabschnitt 22 in die Nut 14 des ersten Bauteils 12 eingeführt werden kann. Es versteht sich, dass sowohl die Breite des Hammerkopfabschnitts 22, also die Erstreckung quer, insbesondere senkrecht zur Längserstreckungsrichtung 32 des Hammerkopfabschnitts 22, als auch die entsprechende Erstreckung des Bolzenabschnitts 24 kleiner sind als die Nutöffnung 36, so dass das Eingriffselement 20 zumindest in der Eintauchstellung 28 in die Nut 14 eintauchen kann. Entsprechend ist die Länge des Hammerkopfabschnitts 22 in Richtung der Längserstreckungsrichtung 32 des Hammerkopfabschnitts 22 größer als die Nutöffnung 36, so dass der Hammerkopfabschnitt 22 die Hinterschnitte 16 hintergreifen und an diesen anliegen kann.

An der dem Basiselement 26 abgewandten Seite des Hammerkopfabschnitts 22 kann dieser zwei Schrägflächen 46 aufweisen, welche das Einführen des Eingriffselements 20 in die Nut 14 erleichtern.

Der Bolzenabschnitt 24 kann beispielsweise einen kreisrunden Querschnitt aufweisen. Allerdings ist in den Bolzenabschnitt 24 eine Rotationssperreinrichtung integriert, in der Art eines Rotationsbegrenzungselements 53, das eine Rotation des zweiten Bauteils 18 gegenüber dem ersten Bauteil 12 begrenzt, wenn das Eingriffselement 20 sich in der Nut 14 befindet und welche sich durch eine bestimmte Formgebung im Querschnitt des Bolzenabschnitts 24 ergibt. Dazu weist, wie beispielhaft in Fig. 3 dargestellt ist, der Bolzenabschnitt 24 einen Querschnitt auf, der zwei Eckbereiche 48 mit darin anschließenden Flanken 50 und zwei die beiden Eckbereiche 48 jeweils miteinander verbindende Kreisbogenbereiche 52 auf. Die Kreisbogenbereiche 52 sind vorzugsweise derart angeordnet, dass der zugehörige Mittelpunkt beider Kreisbodenbereiche 52 zusammenfällt und somit eine virtuelle Drehachse des zweiten Bauteils 18 gegenüber dem ersten Bauteil 12 erzeugt.

Die Eckbereiche 48 weisen einen größeren Abstand zu dieser virtuellen Drehachse, also den Mittelpunkten der Kreisbogenabschnitte 52 auf, als die Kreisbogenabschnitte 52, so dass die Rotation des zweiten Bauteils 18 zum ersten Bauteil 12 behindert ist, wenn das Eingriffselement 20 in die Nut 14 eingetaucht ist. Dazu müssen selbstverständlich die Eckbereiche 48 einen Abstand zu der virtuellen Drehachse aufweisen, der größer ist als die halbe Breite der Nut 14. Somit kann durch die Flanken 50 die Rotation des Eingriffselements 20 innerhalb der Nut 14 begrenzt werden. Dadurch kann erreicht werden, dass die Eintauchstellung 28, in welchem das zweite Bauteil 18 auch wieder aus der Nut 14 entfernt werden kann, leichter aufgefunden wird.

Die Positioniervorrichtung 34 weist mindestens ein Federelement 54, beispielsweise zwei Federelemente 54 auf, welche jeweils eine Erhebung 56 an der Rückfläche 42 aufweisen. Die Mittelpunkte der Erhebung 56 der Federelemente 54 und eine Mittelachse des Bolzenabschnitts 24 liegen ungefähr auf einer Linie, so dass beide Federelemente 54 in die Nut 14 eingreifen können, wenn sich das zweite Bauteil 18 und das erste Bauteil 12 in der Montagestellung 30 befinden.

Vorzugsweise ist eine Breite der Erhebung 56 in Richtung der Längserstreckungsrichtung 32 des Hammerkopfabschnitts 22 an eine Breite der Nut 14 angepasst, so dass, wenn das Federelement 54 in die Nut 14 eingreift ein Formschluss entsteht, welcher eine Bewegung des Federelements 54 quer zur Nut 14 erschwert. Dadurch wird die Rotation des zweiten Bauteils 18 gegenüber dem ersten Bauteil 12 erschwert, wenn sich das zweite Bauteil 18 in der Montagestellung 30 zum ersten Bauteil 12 befindet. Somit bewirkt das Federelement 54 die gewünschte Wirkung der Positioniervorrichtung 34.

Des Weiteren ist das Federelement 54 in der Montagestellung 30 zumindest leicht gespannt, so dass ein möglicherweise vorhandenes Spiel zwischen dem zweiten Bauteil 18 und dem ersten Bauteil 12 entfernt wird und somit das zweite Bauteil 18 ohne zu wackeln den dem ersten Bauteil 12 anliegt. Der gleiche Effekt kann auch dadurch erzielt werden, dass eine Länge des Bolzenabschnitts 24 derart eingestellt wird, dass sowohl die Anlagefläche 44 des Hammerkopfabschnitts 22 an dem Hinterschnitt 16 anliegt als auch gleichzeitig die Rückfläche 42 an einer Oberfläche des ersten Bauteils 12 anliegt. Gegebenenfalls kann die Länge des Bolzenabschnitts 24 derart sein, dass dadurch der Hammerkopfabschnitt 22 federartig leicht elastisch vorgespannt wird und somit ein Anpressdruck zwischen der Rückfläche 42 und dem ersten Bauteil 12 bewirkt wird.

Das Federelement 54 ist, wie es beispielsweise in Fig. 1 dargestellt ist, durch eine reduzierte Wandstärke gebildet. Das heißt, der Bereich des Federelements 54 weist eine geringere Wandstärke auf als die nicht zum Federelement 54 gehörenden Teile des zweiten Bauteils 18. Dadurch ist die Federkonstante in dem Bereich des Federelements 54 verringert, so dass die Elastizität erhöht ist und somit dieser Bereich als Federelement 54 bezeichnet werden kann.

Um die Wandstärke zu reduzieren, kann ein Hohlraum 58 oder eine Ausnehmung 58 vorgesehen sein, welche unterhalb des Federelements 54 angeordnet bzw. ausgebildet sind. Unterhalb bedeutet in diesem Zusammenhang, dass von der Rückseite 40 bzw. der Rückfläche 42 des Basiselements 26 ausgehend gesehen der Hohlraum 58 bzw. die Ausnehmung 58 innerhalb des Basiselements 26 gebildet ist.

Durch den Hohlraum 58 bzw. die Ausnehmung 58 wird die Wandstärke reduziert, wodurch die notwendige Elastizität gegeben ist. Darüber hinaus bewirken der Hohlraum 58 bzw. die Ausnehmung 58, dass ein Federweg für das Federelement 54 gegeben ist. Dadurch kann das Federelement 54 zurückweichen, wenn das zweite Bauteil 18 von der Eintauchstellung 28 in die Montagestellung 30 gebracht wird. Die seitliche Erstreckung des Hohlraums 58 bzw. der Ausnehmung 58 ist dabei größer als die seitliche Ausdehnung der Erhebung 56. Dadurch kann eine besonders günstige Federwirkung erzielt werden, so dass die gesamte Erhebung 56 an der Rückseite 40 des zweiten Bauteils 18 eintauchen kann.

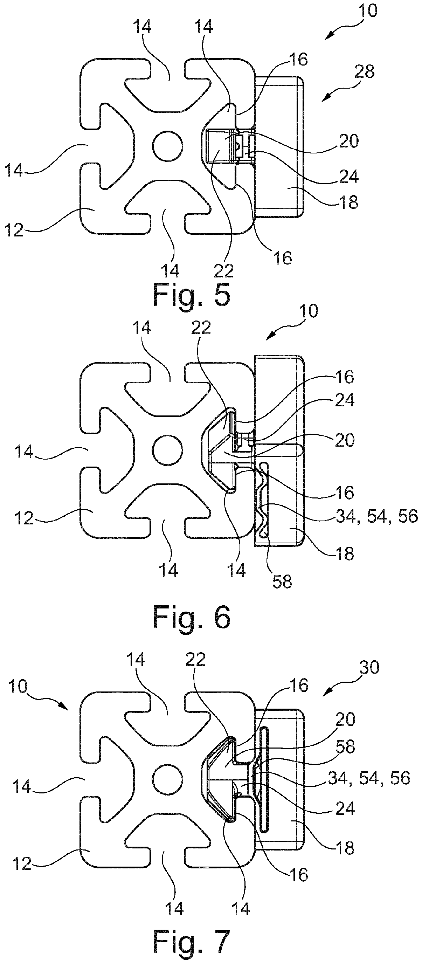

In den Fig. 4 bis 7 ist ein Montagevorgang eines zweiten Bauteils 18 an ein erstes Bauteil 12 beispielhaft dargestellt. In Fig. 4 ist die Eintauchstellung 28 zu sehen, bei welcher den Hammerkopfabschnitt 22 im Wesentlichen parallel zur Nut 14 ausgerichtet ist, so dass der Hammerkopfabschnitt 22 des Eingriffselements 20 in die Nut 14 eintauchen könnte. Ein Zustand, bei welchem das Eingriffselement 20 in der Nut 14 eingetaucht ist, ist beispielhaft in Fig. 5 dargestellt. Durch Rotation kann nun ausgehend von dieser Position die Montagestellung 30, wie sie beispielhaft in Fig. 7 dargestellt ist, erreicht werden.

Eine entsprechende Zwischenstellung ist beispielhaft in Fig. 6 dargestellt. In der Zwischenstellung können die jeweiligen Federelemente 54 in den jeweils dafür vorgesehenen Hohlraum 58 bzw. in die jeweilig dafür vorgesehene Ausnehmung 58 abtauchen, sodass die jeweiligen Erhebungen 56 der Federelemente 54 vorzugsweise in einer Ebene mit der Rückfläche 42 des zweiten Bauteils 18 liegen und somit zumindest bis zur Erreichung der Montagestellung 30 flächig am ersten Bauteil 12 anliegen.

Es versteht sich, dass an einem ersten Bauteil 12 mehrere zweite Bauteile 18 angeordnet werden können. Die zweiten Bauteile 18 weisen zusätzlich zu dem Eingriffselement 20 noch ein Funktionselement, beispielsweise eine Halteeinrichtung 60 auf, mit welcher Hilfsmittel, beispielsweise Werkzeuge, gehalten werden können.

Es versteht sich, dass unterschiedliche zweite Bauteile 18 an ein und demselben ersten Bauteil 12 gefestigt werden können, damit verschiedene Halteeinrichtung 60 für unterschiedliche Hilfsmittel oder unterschiedliche Werkzeuge an der Befestigungsanordnung 10 angebracht werden können.

Das in den Fig. 1 bis 7 dargestellte zweite Bauteil 18 weist als Halteeinrichtung 60 beispielsweise einen Magnethalter auf. Dazu weist das zweite Bauteil 18 ein Magnetelement auf, mit welchem magnetisierbare Objekte angezogen werden können, so dass diese an dem zweiten Bauteil 18 haften können.

Bei einer Variante des zweiten Bauteils 18, wie sie beispielhaft in den Fig. 8 und 9 dargestellt ist als Halteeinrichtung 60 ein Dokumentenhalter in dem zweiten Bauteil 18 integriert. Dazu ist ein kugelförmiges Klemmelement 62 zwischen dem Basiselement 26 und einer keilförmige Nut 64 angeordnet. Die keilförmige Nut 64 erweitert sich nach oben hin, so dass schwerkraftbedingt, das Klemmelement 62 Richtung der schmaleren Seite der Nut 64 bewegt wird und dadurch in Richtung einer Klemmfläche 66 gedrückt wird, welche an dem Basiselement 26 ausgebildet ist. Um ein Dokument zu halten, kann dieses von unten zwischen das Klemmelement 62 und der Klemmfläche 66 eingefügt werden. Das Klemmelement 62 klemmt dadurch das Dokument schwerkraftbedingt ein und hält dieses im zweiten Bauteil 18.

Eine in den Fig. 10 und 11 dargestellte Variante eines zweiten Bauteils 18 ist mit einem Bithalter ausgestattet. Dazu weist das zweite Bauteil 18 mehrere sich im Wesentlichen vertikal erstreckende unten geschlossene Öffnungen 68 auf, in welche beispielsweise Bits oder dergleichen eingesetzt werden können. In dem Bithalter können verschiedene Bits mit unterschiedlichen Antriebskonturen für Schrauben oder ähnliches angeordnet werden.

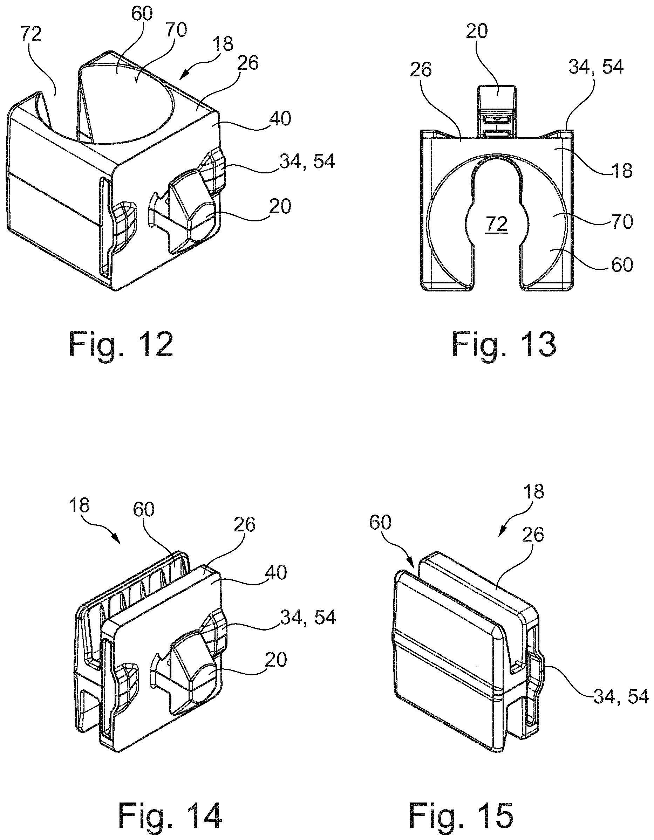

Bei einer in den Fig. 12 und 13 dargestellten Variante des zweiten Bauteils 18 ist als Halteeinrichtung 60 eine Werkzeughalteeinrichtung für Werkzeuge, insbesondere Schaftwerkezeuge, vorgesehen, die einen vergrößerten Kopf aufweisen. Die Halteeinrichtung 60 gemäß der Fig. 12 und 13 weist einen kegelförmigen oberen Bereich 70 und einen schlitzförmigen Ausschnitt 72 auf, in welchem beispielsweise ein Stiel bzw. ein Schaft des Werkzeugs angeordnet sein kann. Der kegelförmige Bereich 70 kann einen Werkzeugkopf halten.

Eine in den Fig. 14 und 15 dargestellte Variante eines zweiten Bauteils 18 stellt die Halteeinrichtung 60 eine Vorrichtung zum Halten von Sichtlagerkisten oder dgl. dar. Eine derartige Sichtlagerkiste kann vorzugsweise formschlüssig an der Halteeinrichtung 60 gehalten, insbesondere eingehakt, werden.

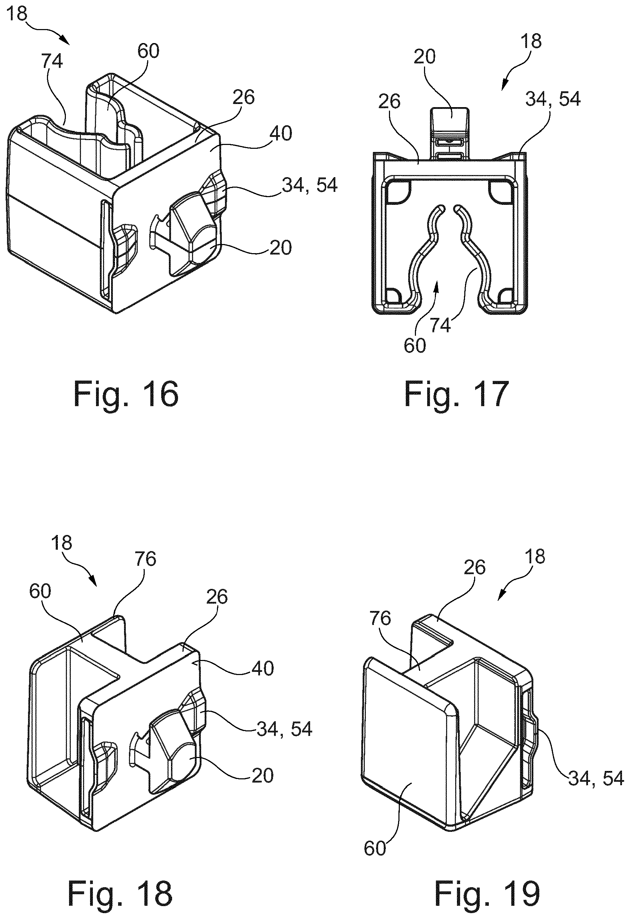

Bei einer in den Fig. 16 und 17 dargestellten Variante weist das zweite Bauteil 18 als Halteeinrichtung 60 eine federelastische Klemmvorrichtung 74 auf, mit welcher Werkzeuge, Stifte oder andere Hilfsmittel eingeklemmt und somit an dem zweiten Bauteil 18 gehalten werden können.

Eine weitere Variante eines zweiten Bauteils 18, wie es beispielhaft in Fig. 18 und 19 dargestellt ist, ist als Halteeinrichtung 76 für beispielsweise Maulschlüssel, ausgebildet. Die Halteeinrichtung 76 kann hierbei beidseitig in Längsrichtung einer Nut 14 Taschen aufweisen, in die sich zumindest teilweise ein derartiger Maulschlüssel erstrecken kann. Zum Halten von einem solchen Maulschlüssel sind somit zweckmäßiger Weise zwei zweite Bauteile 18 mit der zuvor genannten Halteeinrichtung 76 von Nöten. Hierbei sind die zweiten Bauteile 18 beabstandet voneinander angeordnet und umgreifen jeweils einen Teil eines Maulschlüsselkopfes, wobei der Schaft des Maulschlüssels zwischen den beabstandeten zweiten Bauteilen 18 Platz findet.

## Patentansprüche

1. Befestigungsanordnung (10)
- mit einem ersten Bauteil (12), das mindestens eine hinterschnittene Nut (14) aufweist,
- mit einem zweiten Bauteil (18), das ein Basiselement (26) aufweist und das an einer Rückseite (40) des Basiselements (26) ein von einer Rückfläche (42) der Rückseite (40) abstehendes Eingriffselement (20) aufweist,
- wobei das Eingriffselement (20) in die Nut (14) eingreifen kann,
- wobei das Eingriffselement (20) einen Hammerkopfabschnitt (22) aufweist,
- wobei der Hammerkopfabschnitt (22) in einer Eintauchstellung (28) des zweiten Bauteils (18) derart zur Nut (14) ausgerichtet ist, dass der Hammerkopfabschnitt (22) in die Nut (14) eintauchen kann und
- wobei der Hammerkopfabschnitt (22) in einer Montagestellung (30) des zweiten Bauteils (18) derart zur Nut (14) ausgerichtet ist, dass der Hammerkopfabschnitt (22) an zumindest einem Hinterschnitt (16) der Nut (14) anliegt,
- wobei eine Positioniervorrichtung (34) vorgesehen ist, welche das zweite Bauteil (18) durch Formschluss und/oder Kraftschluss in der Montagestellung (30) hält,
- wobei die Positioniervorrichtung (34) mindestens ein Federelement (54) aufweist, das in der Montagestellung (30) des zweiten Bauteils (18) zumindest teilweise in die Nut (14) des ersten Bauteils (12) eingreift,
**dadurch gekennzeichnet,**
- **dass** das Federelement (54) durch einen Bereich mit reduzierter Wandstärke gebildet ist, das heißt einem Bereich, der eine geringere Wandstärke aufweist als die nicht zum Federelement (54) gehörenden Teile des zweiten Bauteils (18),
- **dass** ein Bolzenabschnitt (24) als Rotationsbegrenzungselement (53) einen Querschnitt aufweist, der zwei Eckbereiche (48) mit darin anschließenden Flanken (50) und zwei die beiden Eckbereiche (48) jeweils miteinander verbindende Kreisbogenbereiche (52) aufweist,
- **dass** das zweite Bauteil (18) einen Magnethalter als Halteeinrichtung (60) aufweist.

2. Befestigungsanordnung nach Anspruch 1,
**dadurch gekennzeichnet,**
**dass** die Positioniervorrichtung (34) mindestens ein Federelement (54) aufweist, das in der Montagestellung (30) zumindest teilweise gespannt ist und dadurch den Hammerkopfabschnitt (22) gegen die Hinterschnitte (16) der Nut (14) vorspannt.

3. Befestigungsanordnung nach Anspruch 1 oder 2,
**dadurch gekennzeichnet,**
- **dass** das mindestens eine Federelement (54) an der Rückseite (40) des Basiselements (26) des zweiten Bauteils (18) angeordnet ist,
- **dass** das Basiselement (26) des zweiten Bauteils (18) an der Rückseite (40) eine Rückfläche (42) aufweist,
- **dass** das mindestens eine Federelement (54) gegenüber der Rückfläche (42) des Basiselements (26) des zweiten Bauteils (18) erhaben ist.

4. Befestigungsanordnung nach Anspruch 3,
**dadurch gekennzeichnet,**
**dass** unterhalb des Federelements (54) ein Hohlraum (58) oder eine Ausnehmung (58) ausgebildet ist.

5. Befestigungsanordnung nach einem der Ansprüche 1 bis 4,
**dadurch gekennzeichnet,**
- **dass** das zweite Bauteil (18) den Bolzenabschnitt (24) aufweist, welcher den Hammerkopfabschnitt (22) mit der Rückfläche (42) des zweiten Bauteils (18) verbindet,
- **dass** das an dem Bolzenabschnitt (24) angeordnete Rotationsbegrenzungselement (53) eine Rotation des zweiten Bauteils (18) gegenüber dem ersten Bauteil (12) begrenzt, wenn das Eingriffselement (20) sich in der Nut (14) befindet.

6. Befestigungsanordnung nach einem der Ansprüche 1 bis 5,
**dadurch gekennzeichnet,**
**dass** an der Halteeinrichtung (60) Hilfsmittel, insbesondere Werkzeuge, gehalten werden können.

7. Befestigungsanordnung nach einem der Ansprüche 1 bis 6,
**dadurch gekennzeichnet,**
**dass** das Eingriffselement (20) drehfest an dem zweiten Bauteil (18) gehalten ist.

8. Befestigungsanordnung nach einem der Ansprüche 1 bis 7,
**dadurch gekennzeichnet,**
- **dass** das Eingriffselement (20) und das Basiselement (26) materialeinheitlich einstückig ausgebildet sind, und/oder
- **dass** die Halteeinrichtung (60) materialeinheitlich einstückig zu dem Basiselement (26) ausgebildet ist.

9. Bauteil (18) für eine Befestigungsanordnung (10) nach einem der Ansprüche 1 bis 8,
- mit einem Basiselement (26),
- mit einem Eingriffselement (20), das an einer Rückseite (40) an dem Basiselement (26) angeordnet ist und das einen Bolzenabschnitt (24) und einen Hammerkopfabschnitt (22) aufweist, wobei der Bolzenabschnitt (24) den Hammerkopfabschnitt (22) mit dem Basiselement (26) verbindet, **gekennzeichnet durch** eine als Magnethalter ausgebildete Halteeinrichtung (60), sowie weiter **dadurch** gekennzeichnet,
- dass das Bauteil (18) mindestens ein Federelement (54) aufweist, das mit dem Bolzenabschnitt (24) eine Linie bildet, die quer zu einer Längserstreckungsrichtung (32) des Hammerkopfabschnitts (22) verläuft,
- dass der Bolzenabschnitt (24) als Rotationsbegrenzungselement (53) einen Querschnitt aufweist, der zwei Eckbereiche (48) mit darin anschließenden Flanken (50) und zwei die beiden Eckbereiche (48) jeweils miteinander verbindende Kreisbogenbereiche (52) aufweist.

10. Bauteil nach Anspruch 9,
**dadurch gekennzeichnet,**
**dass** das Bauteil (18) zwei Federelemente (54) aufweist, die zusammen mit dem Bolzenabschnitt (24) auf einer Linie liegen.

11. Bauteil nach Anspruch 9 oder 10,
**dadurch gekennzeichnet,**
- **dass** das mindestens eine Federelement (54) an der Rückseite (40) des Basiselements (26) ausgebildet ist,
- **dass** das Basiselement (26) an der Rückseite (40) eine Rückfläche (42) aufweist,
- **dass** das mindestens eine Federelement (54) gegenüber der Rückfläche (42) des Basiselements (26) erhaben ist.

12. Bauteil nach einem der Ansprüche 9 bis 11,
**dadurch gekennzeichnet,**
**dass** das Federelement (54) durch einen Bereich mit reduzierter Wandstärke gebildet ist, der eine geringere Wandstärke aufweist als die nicht zum Federelement (54) gehörenden Teile des Bauteils (18).

13. Bauteil nach einem der Ansprüche 9 bis 12,
**dadurch gekennzeichnet,**
**dass** das Eingriffselement (20) drehfest an dem Bauteil (18) gehalten ist.

14. Bauteil nach einem der Ansprüche 9 bis 13,
**dadurch gekennzeichnet,**
- **dass** das Eingriffselement (20) und das Basiselement (26) materialeinheitlich einstückig ausgebildet sind, und/oder
- **dass** die Halteeinrichtung (60) materialeinheitlich einstückig zu dem Basiselement (26) ausgebildet ist.

## Claims

1. Fastening assembly (10)
- with a first component (12) which has at least one undercut groove (14),
- with a second component (18) which has a base element (26) and which on a rear side (40) of the base element (26) has an engagement element (20) projecting from a rear surface (42) of the rear side (40),
- wherein the engagement element (20) can engage with the groove (14),
- wherein the engagement element (20) has a hammerhead portion (22),
- wherein the hammerhead portion (22) is aligned relative to the groove (14) in an insertion position (28) of the second component (18) such that the hammerhead portion (22) can be inserted into the groove (14) and
- wherein the hammerhead portion (22) is aligned relative to the groove (14) in an assembled position (30) of the second component (18) such that the hammerhead portion (22) fits against at least one undercut (16) of the groove (14),
- wherein a positioning device (34) is provided which holds the second component (18) in the assembled position (30) in a form-fitting and/or force-fitting manner,
- wherein the positioning device (34) has at least one spring element (54) which engages at least partially in the groove (14) of the first component (12) in the assembled position (30) of the second component (18),
**characterised in that**
- the spring element (54) is formed by a region with a reduced wall thickness, i.e. a region which has a smaller wall thickness than the parts of the second component (18) which do not belong to the spring element (54),
- a bolt portion (24) as a rotation-limiting element (53) has a cross-section which has two two corner regions (48) with flanks (50) adjoining therein and two circular arc regions (52) connecting the two corner regions (48) to one another respectively,
- the second component (18) has a magnet holder as a holding device (60).

2. Fastening assembly according to claim 1,
**characterised in that**
the positioning device (34) has at least one spring element (54) which is at least partially tensioned in the assembled position (30) and thereby biases the hammerhead portion (22) against the undercuts (16) of the groove (14).

3. Fastening assembly according to claim 1 or 2,
**characterised in that**
- the at least one spring element (54) is arranged on the rear side (40) of the base element (26) of the second component (18),
- the base element (26) of the second component (18) has a rear surface (42) on the rear side (40),
- the at least one spring element (54) is raised relative to the rear surface (42) of the base element (26) of the second component (18).

4. Fastening assembly according to claim 3,
**characterised in that**
a cavity (58) or a recess (58) is formed below the spring element (54).

5. Fastening assembly according to any of claims 1 to 4,
**characterised in that**
- the second component (18) has the bolt portion (24) which connects the hammerhead portion (22) to the rear surface (42) of the second component (18),
- the rotation-limiting element (53) arranged on the bolt portion (24) limits a rotation of the second component (18) relative to the first component (12) when the engagement element (20) is located in the groove (14).

6. Fastening assembly according to any of claims 1 to 5,
**characterised in that**
auxiliary means, in particular tools, can be held on the holding device (60).

7. Fastening assembly according to any of claims 1 to 6,
**characterised in that**
the engagement element (20) is held on the second component (18) in a rotationally secure manner.

8. Fastening assembly according to any of claims 1 to 7,
**characterised in that**
- the engagement element (20) and the base element (26) are made in one piece from the same material and/or
- the holding device (60) is made in one piece from the same material with the base element (26).

9. Component (18) for a fastening assembly (10) according to any of claims 1 to 8,
- with a base element (26),
- with an engagement element (20) which is arranged on a rear side (40) on the base element (26) and which has a bolt portion (24) and a hammerhead portion (22) wherein the bolt portion (24) connects the hammerhead portion (22) to the base element (26), **characterised by** a holding device (60) designed as a magnet holder and further **characterised in that**
- the component (18) has at least one spring element (54) which forms a line with the bolt portion (24) which runs transversely with respect to a longitudinal extension direction (32) of the hammerhead portion (22),
- the bolt portion (24) as a rotation-limiting element (53) has a cross-section which has two corner sections (48) with adjoining flanks (50) and two circular arc regions (52) connecting the two corner regions (48) to one another respectively.

10. Component according to claim 9,
**characterised in that**
the component (18) has two spring elements (54) which lie together in line with the bolt portion (24).

11. Component according to claim 9 or 10,
**characterised in that**
- the at least one spring element (54) is formed on the rear side (40) of the base element (26),
- the base element (26) has a rear surface (42) on the rear side (40),
- the at least one spring element (54) is raised with respect to the rear surface (42) of the base element (26).

12. Component according to any of claims 9 to 11,
**characterised in that**
the spring element (54) is formed by a region with a reduced wall thickness which has smaller wall thickness than the parts of the component (18) which do not belong the spring element (54).

13. Component according to any of claims 9 to 12,
**characterised in that**
the engagement element (20) is held on the component (18) in a rotationally secure manner.

14. Component according to any of claims 9 to 13,
**characterised in that**
- the engagement element (20) and the base element (26) are made in one piece from the same material and/or
- the holding device (60) is formed in one piece from the same material with the base element (26).

## Revendications

1. Dispositif de fixation (10)
- avec un premier composant (12) présentant au moins une rainure en contre-dépouille (14),
- avec un second composant (18), présentant un élément de base (26) et qui présente sur une face arrière (40) de l'élément de base (26) un élément de prise (20) dépassant d'une surface arrière (42) de la face arrière (40),
- dans lequel l'élément de prise (20) peut s'engager dans la rainure (14),
- dans lequel l'élément de prise (20) présente un segment en tête de marteau (22),
- dans lequel le segment en tête de marteau (22) est orienté vers la rainure (14) dans une position d'immersion (28) du second composant (18), de sorte que le segment en tête de marteau (22) peut s'immerger dans la rainure (14) et
- dans lequel le segment en tête de marteau (22) est orienté vers la rainure (14) dans une position de montage (30) du second composant (18), de sorte que le segment en tête de marteau (22) s'appuie contre au moins une contre-dépouille (16) de la rainure (14),
- dans lequel un dispositif de positionnement (34) est prévu, lequel maintient le second composant (18) dans la position de montage (30) par complémentarité de forme et/ou de force,
- dans lequel le dispositif de positionnement (34) présente au moins un élément de ressort (54) qui s'engage dans la position de montage (30) du second composant (18) au moins partiellement dans la rainure (14) du premier composant (12), **caractérisé en ce que**,
- l'élément de ressort (54) est formé par une région ayant une épaisseur de paroi réduite, c'est-à-dire une région présentant une épaisseur de paroi inférieure à celle des parties du second composant (18) n'appartenant pas à l'élément de ressort (54),
- un segment de boulon (24) servant d'élément de limitation de la rotation (53) présente une section transversale comprenant deux régions angulaires (48) avec des flancs s'y rattachant (50) et deux régions en arc de cercle (52) reliant respectivement ensemble les deux régions angulaires (48),
- le second composant (18) comporte un support magnétique servant de dispositif d'ancrage (60).

2. Dispositif de fixation selon la revendication 1,
**caractérisé en ce que**,
le dispositif de positionnement (34) présente au moins un élément de ressort (54) qui est au moins partiellement serré dans la position de montage (30) et précontraint ainsi le segment en tête de marteau (22) contre la contre-dépouille (16) de la rainure (14).

3. Dispositif de fixation selon la revendication 1 ou 2,
**caractérisé en ce que**,
- le au moins un élément de ressort (54) est agencé contre la face arrière (40) de l'élément de base (26) du second composant (18),
- l'élément de base (26) du second composant (18) présente une surface arrière (42) au niveau de la face arrière (40),
- le au moins un élément de ressort (54) est en relief par rapport à la surface arrière (42) de l'élément de base (26) du second composant (18),

4. Dispositif de fixation selon la revendication 3,
**caractérisé en ce que**,
une cavité (58) ou un évidement (58) est configuré en dessous de l'élément de ressort (54).

5. Dispositif de fixation selon l'une quelconque des revendications 1 à 4,
**caractérisé en ce que**,
- le second composant (18) comprend le segment de boulon (24) qui relie le segment en tête de marteau (22) à la surface arrière (42) du second composant (18),
- l'élément de limitation de la rotation (53) agencé au niveau du segment de boulon (24) limite une rotation du second composant (18) par rapport au premier composant (12), lorsque l'élément de prise (20) se trouve dans la rainure (14).

6. Dispositif de fixation selon l'une quelconque des revendications 1 à 5,
**caractérisé en ce que**,
des moyens de fixation, en particulier des outils, peuvent être fixés au niveau du dispositif d'ancrage (60).

7. Dispositif de fixation selon l'une quelconque des revendications 1 à 6,
**caractérisé en ce que**,
l'élément de prise (20) est maintenu de manière fixe contre le second composant (18).

8. Dispositif de fixation selon l'une quelconque des revendications 1 à 7,
**caractérisé en ce que**,
- l'élément de prise (20) et l'élément de base (26) sont conçus d'un seul tenant et dans le même matériau, et/ou
- le dispositif d'ancrage (60) est conçu d'un seul tenant avec l'élément de base (26) et dans le même matériau que celui-ci.

9. Composant (18) pour un dispositif de fixation (10) selon l'une quelconque des revendications 1 à 8,
- avec un élément de base (26),
- avec un élément de prise (20) qui est agencé sur une face arrière (40) contre l'élément de base (26) et comporte un segment de boulon (24) et un segment en tête de marteau (22), dans lequel le segment de boulon (24) relie le segment en tête de marteau (22) à l'élément de base (26), **caractérisé par** un dispositif d'ancrage (60) conçu sous forme de support magnétique, etde plus **caractérisé en ce que**,
- le composant (18) comporte au moins un élément de ressort (54) qui forme avec le segment de boulon (24) une ligne qui s'étend transversalement à une direction d'extension longitudinale (32) du segment en tête de marteau (22),
- le segment de boulon (24) servant d'élément de limitation de la rotation (53) présente une section transversale comprenant deux régions angulaires (48) avec des flancs s'y rattachant (50) et deux régions en arc de cercle (52) reliant respectivement ensemble les deux régions angulaires (48).

10. Composant selon la revendication 9,
**caractérisé en ce que**,
le composant (18) comprend deux éléments de ressort (54) qui reposent sur une ligne conjointement au segment de boulon (24).

11. Composant selon la revendication 9 ou 10,
**caractérisé en ce que**,
- le au moins un élément de ressort (54) est conçu au niveau de la face arrière (40) de l'élément de base (26),
- l'élément de base (26) présente une surface arrière (42) au niveau de la face arrière (40),
- le au moins un élément de ressort (54) est en relief par rapport à la surface arrière (42) de l'élément de base (26),

12. Composant selon l'une quelconque des revendication 9 à 11,
**caractérisé en ce que**,
l'élément de ressort (54) est formé par une région ayant une épaisseur de paroi réduite, qui présente une épaisseur de paroi inférieure à celle des parties du composant (18) n'appartenant pas à l'élément de ressort (54).

13. Composant selon l'une quelconque des revendication 9 à 12,
**caractérisé en ce que**,
l'élément de prise (20) est maintenu de manière fixe contre le composant (18).

14. Composant selon l'une quelconque des revendication 9 à 13,
**caractérisé en ce que**,
- l'élément de prise (20) et l'élément de base (26) sont conçus d'un seul tenant et dans le même matériau, et/ou
- le dispositif d'ancrage (60) est conçu d'un seul tenant avec l'élément de base (26) et dans le même matériau que celui-ci.
